# EUROPÄISCHE PATENTSCHRIFT

(11) **EP 1 640 091 B1**
(45) Veröffentlichungstag und Bekanntmachung des Hinweises auf die Patenterteilung: **31.03.2010**
(21) Anmeldenummer: 05017745.0
(22) Anmeldetag: 16.08.2005
(51) Int. Cl.: B23B 31/20, B23Q 11/10

(54) **Spannmutter als Werkzeughalterteil für ein Werkzeug**
Clamping nut adapted as tool holder
Écrou de verrouillage adapté comme porte outil

(30) Priorität: 10.09.2004 DE 102004044267
(43) Veröffentlichungstag der Anmeldung: 29.03.2006
(73) Patentinhaber: Robert Koch GmbH, 72469 Tieringen (DE)
(72) Erfinder: Koch, Robert, 72469 Tieringen (DE)
(74) Vertreter: Maser, Jochen

(56) Entgegenhaltungen:
- DE-A1- 3 314 719
- US-A- 5 405 155
- PATENT ABSTRACTS OF JAPAN Bd. 1995, Nr. 05, 30. Juni 1995 (1995-06-30) & JP 07 051982 A (NISSHIN KOKI KK), 28. Februar 1995 (1995-02-28)

## Beschreibung

Die Erfindung betrifft eine Spannmutter als Werkzeughalterteil für ein Werkzeug gemäß dem Oberbegriff des Patentanspruchs 1 und wie z.B. aus DE-U-9109301 bekannt ist.

Derartige Spannmuttern werden beispielsweise für innengekühlte Werkzeuge eingesetzt, um diese an der Werkzeugaufnahme zu befestigen. Das Kühlmittel, das gleichzeitig eine Schmierfunktion ausüben kann, wird je nach Anwendungsfall mit Drücken von bis zu etwa 85 bar bis 150 bar zugeführt. Deshalb umfasst die Spannmutter eine Dichtungsscheibe, um eine Abdichtung zwischen dem einzuspannenden Werkzeug und der Spannmutter für derartige hohe Beanspruchungen zu ermöglichen und einen unkontrollierten Austritt des Kühl-/Schmiermittels zu verhindern.

Diese Dichtscheibe wird in die Spannmutter eingelegt, um einerseits eine Abdichtung zwischen der Spannmutter und der Dichtscheibe und andererseits zwischen der Dichtscheibe und dem durch die Dichtscheibe hindurchgeführten Werkzeug zu ermöglichen.

Innengekühlte Werkzeuge weisen den Vorteil auf, dass unmittelbar an der Bearbeitungsstelle Kühl- und/oder Schmiermittel zugeführt wird. Aufgrund der Einbringung von zumindest einem inneren Kühlmittelkanal ist die Bearbeitung von kleinen Durchmessern mit solchen Werkzeugen beschränkt, da entlang der zentralen Achse des Werkzeuges die Kühlmittelbohrung läuft. Zusätzlich weisen diese Werkzeuge eine Schwächung im Querschnitt auf, der insbesondere bei kleineren Bearbeitungsdurchmessern kritisch wird.

Darüber hinaus hat sich gezeigt, dass eine äußere Kühlung des Werkzeuges hohe Standzeiten ermöglicht und zu einer exakten Bearbeitung führt. Eine Zuführung von Kühl- und/oder Schmiermittel ohne die Verwendung einer Dichtscheibe führt jedoch zu einem diffusen und nicht kontrollierbaren Austritt der Flüssigkeit. Durch die hohen Drehzahlen wird des Weiteren bewirkt, dass das diffus austretende Kühl-/Schmiermittel radial nach außen weggeschleudert wird und somit nicht zur gewünschten Stelle zur Kühlung am Werkzeug gelangt.

Der Erfindung liegt deshalb die Aufgabe zugrunde, eine Spannmutter zu schaffen, welche eine gezielte Zuführung von Kühl-/Schmiermittel ermöglicht.

Diese Aufgabe wird erfindungsgemäß durch die Merkmale des Anspruchs 1 gelöst. Weitere vorteilhafte Ausgestaltungen sind in weiteren Ansprüchen angegeben.

Durch die Einbringung von zumindest einem Durchgangskanal in die Spannmutter oder die Dichtscheibe wird ermöglicht, dass das Kühl-/Schmiermittel gezielt zur Bearbeitungsstelle oder auf das Werkzeug zugeführt wird, um an der gewünschten Position eine Kühlung zu erzielen. Aufgrund der hohen Drücke oder trotz hoher Drehzahlen kann der Kühl-/Schmiermittelstrahl gezielt zumindest zur Bearbeitungsstelle oder zum Werkzeug geführt werden, um ein Kühlen und Schmieren sowie auch einen Abtransport von Spänen sicherzustellen.

Diese erfindungsgemäße Ausgestaltung ermöglicht sowohl den Einsatz von Werkzeugen mit und ohne innerer Kühlmittelzuführung. Darüber hinaus ist aufgrund der zumeist sehr schwer von außen zugänglichen Prozessräume eine kompakte Bauweise und einfache Anordnung zur äußeren Kühlung des Werkzeuges ermöglicht. Des Weiteren kann durch die erfindungsgemäße Ausgestaltung auch eine Minimalmengenschmierung von Werkzeugen ermöglicht sein.

Nach einer vorteilhaften Ausgestaltung der Erfindung ist vorgesehen, dass mehrere Durchgangskanäle gleichmäßig über den Umfang verteilt vorgesehen sind. Diese Ausgestaltung weist den Vorteil auf, dass eine gleiche Massenverteilung an der Spannmutter oder Dichtscheibe vorgesehen ist, so dass keine Unwucht entsteht. Gleichzeitig kann eine Zuführung von gezielten Strahlen von allen Seiten auf das Werkzeug erfolgen, so dass eine gleichmäßige Kühlung gegeben ist. Alternativ kann vorgesehen sein, dass die Durchgangskanäle in einer ungleichen Teilung insbesondere mit einer Wuchtung vorgesehen sind, um eine präzise Bearbeitung der Bohrung zu ermöglichen.

An einem bearbeitungsseitigen Ende des Durchgangskanales ist bevorzugt ein Aufnahmeabschnitt vorgesehen, welcher einen Düseneinsatz oder ein Führungsrohr austauschbar aufnimmt. Dadurch kann wahlweise an den Bearbeitungsfall angepasst eine entsprechende Ausstattung der Spannmutter gegeben sein. Der Aufnahmeabschnitt des Düsenkanales kann sowohl in der Spannmutter als auch in der Dichtungsscheibe oder in beiden vorgesehen sein.

Alternativ kann auch eine Rast-, Schraub-, Klemm-, Löt- oder Schweißverbindung vorgesehen sein.

Bevorzugt ist ein Düseneinsatz in den Aufnahmeabschnitt eingepresst. Dadurch kann eine kleine und kompakt bauende Anordnung vorgesehen sein, um eine gezielte Zuführung des Kühl-/Schmiermittelstrahles zu ermöglichen.

Der Düseneinsatz weist bevorzugt eine einstellbare Düse auf, so dass der auf das Werkzeug gerichtete Kühl-/Schmiermittelstrahl im Winkel einstellbar ist. Bevorzugt ist in einer Kunststoff- oder Metallführung ein Kugelelement mit einer Durchgangsbohrung vorgesehen, welches manuell mit einem Stift oder Dorn verstellbar ist. Dadurch kann eine individuelle Strahlzuführung unabhängig von dem oder den benachbarten Düseneinsätzen vorgenommen werden.

Der Aufnahmeabschnitt, der Düseneinsatz und/oder das Führungsrohr sind vorteilhafterweise mit einem Verschlussstopfen verschließbar. Somit können die Durchgangskanäle in der Spannmutter verschlossen werden. Die Dichtscheiben sind austauschbar zur Spannmutter vorgesehen. Diese werden auf den Außendurchmesser des Werkzeugschaftes in kleinen Durchmesserstufungen angepasst. Durch den Austausch der Dichtscheiben kann sowohl eine Dichtscheibe mit und ohne Durchgangskanal eingesetzt werden. Somit kann diese Spannmutter in einfacher Weise von einer außengekühlten Zuführung zur Kühlung über innengekühlte Werkzeuge einfach umgerüstet werden oder auch beide Kühlvarianten miteinander kombinieren.

Nach einer alternativen Ausgestaltung der Erfindung ist vorgesehen, dass das in dem Aufnahmeabschnitt angeordnete Führungsrohr aus einem eigensteifen, jedoch biegsamen Material, vorzugsweise aus einem metallischen Material, vorgesehen ist. Dadurch kann die Zuführung des Kühl-/Schmiermittelstrahls zum Werkzeug durch eine entsprechende Biegung des Führungsrohres bestimmt werden. Vorzugsweise wird ein Kupfermaterial oder dergleichen eingesetzt. Das Führungsrohr kann durch eine Schraubverbindung oder eine Lötverbindung oder dergleichen in dem Aufnahmeabschnitt befestigt sein. Ebenso kann eine Pressung zur Aufnahme des Führungsrohrs in dem Aufnahmeabschnitt vorgesehen sein.

Das Führungsrohr kann zusätzlich noch gedrallt angeordnet sein. Dadurch wird die Unwucht bei der Rotation der Spannmutter verringert.

Nach einer weiteren vorteilhaften Ausgestaltung der Erfindung ist vorgesehen, dass das Führungsrohr an einem zum Werkzeug gerichteten Ende eine Düse aufweist. Somit kann ein starker Strahl auf das Werkzeug gerichtet werden, um die Abfuhr von Spänen zu erhöhen. Ebenso ist diese Zuführung besonders für die Minimalmengenschmierung geeignet, welche aus einem Gemisch aus Luft und Kühl-/Schmiermittel besteht, wobei ein großer Anteil an Luft vorgesehen ist.

Nach einer alternativen Ausgestaltung der erfindungsgemäßen Durchgangskanäle ist vorgesehen, dass der zumindest eine Durchgangskanal einen ersten und einen weiteren Kanalabschnitt aufweist, wobei einer zur bearbeitungsseitigen Stirnseite der Spannmutter führende Kanalabschnitt auf das Werkzeug zugeneigt ist. Dieser zumindest zwei Abschnitte aufweisende Durchgangskanal ermöglicht ebenfalls eine Zuführung eines Kühl-/Schmiermittelstrahles in unterschiedlichen Winkeln, wobei der in die Stirnseite mündende Durchgangskanal durch seine Winkellage zur Rotationsachse die Strahlrichtung bestimmt. Diese Ausgestaltung weist den Vorteil auf, dass keine zusätzlichen Elemente an der Spannmutter oder Dichtscheibe einzusetzen sind.

Der zum Innenraum der Spannmutter führende Durchgangskanal beziehungsweise -kanalabschnitt kann durch eine Bohrung, einen Einstich, eine Einfräsung in Form einer Nut oder dergleichen ausgebildet sein. Bevorzugt ist zur einfachen Herstellung eine Bohrung vorgesehen, die parallel zur Rotationsachse der Spannmutter eingebracht ist. Analoges gilt für die Dichtscheibe.

Der zur bearbeitungsseitigen Stirnseite führende Kanalabschnitt des Durchgangskanals ist düsenförmig ausgebildet. Dadurch kann ein gezielter Strahl ausgegeben werden. Gleichzeitig kann eine Beschleunigung des Kühl-/Schmiermittels gegeben sein.

Die erfindungsgemäße Spannmutter weist zumindest einen Durchgangskanal auf, welcher den Kühl-/Schmiermittelkanal zu einem ersten Bereich des Werkzeuges, beispielsweise zur Werkzeugspitze, führt und zumindest einen weiteren Durchgangskanal, der den Kühl-/Schmiermittelstrahl in einen davon abweichenden Bereich zuführt. Somit können beispielsweise drei in der Spannmutter versehene Durchgangskanäle zur Werkzeugspitze führen und drei weitere ebenfalls in der Spannmutter oder der Dichtscheibe versehene Durchgangskanäle den oberen oder mittleren Bereich des Werkzeuges kühlen. Des Weiteren kann auch vorgesehen sein, dass beispielsweise bei einer Anordnung von sechs Durchgangskanälen in der Spannmutter zwei Durchgangskanäle eine Strahlzuführung zur Werkzeugspitze ermöglichen, zwei Durchgangskanäle eine Strahlzuführung im ersten Drittel des Werkzeuges ermöglichen und die weiteren zwei Durchgangskanäle eine Strahlzuführung im zweiten Drittel des Werkzeuges ermöglichen. Die Kombination der Winkel und die Anzahl und Anordnungen der Durchgangskanäle in der Spannmutter und/oder der Dichtscheibe sind beliebig.

Die erfindungsgemäße Zuführung des Kühl-/Schmiermittels ist auch bei einer zweiteiligen Spannmutter ermöglicht. Die zweiteilige Spannmutter umfasst eine Mutterhülse und einen Konusring, wobei bevorzugt der zumindest eine Durchgangskanal in der Mutterhülse und/oder dem Konusring vorgesehen ist. Wahlweise kann auch die Dichtscheibe Durchgangskanäle aufweisen.

Zur Herstellung der Durchgangskanäle in der Spannmutter erfolgt bevorzugt eine Bohrbearbeitung, ein Erodieren oder eine Laser- oder Wasserstrahlbearbeitung.

Die Erfindung sowie weitere vorteilhafte Ausführungsformen und Weiterbildungen derselben werden im Folgenden anhand den in den Zeichnungen dargestellten Beispielen näher beschrieben und erläutert. Es zeigen:
- Figur 1: Eine schematische Schnittdarstellung einer erfindungsgemäßen Spannmutter,
- Figur 2: eine schematische Draufsicht auf eine bearbeitungsseitige Stirnseite der Spannmutter,
- Figur 3: eine schematische Schnittdarstellung einer alternativen Ausführungsform zu Figur 1,
- Figur 4: eine schematische Darstellung einer weiteren alternativen Ausführungsform der Erfindung,
- Figur 5: eine schematische Schnittdarstellung einer weiteren alternativen Ausführungsform einer erfindungsgemäßen Spannmutter,
- Figur 6: eine schematische Ansicht einer Stirnseite gemäß der erfindungsgemäßen Spannmutter in Figur 5,
- Figur 7: eine schematische Schnittdarstellung einer erfindungsgemäßen zweiteilig ausgebildeten Spannmutter und
- Figur 8: eine schematische Schnittdarstellung einer weiteren alternativen Ausführungsform einer Spannmutter.

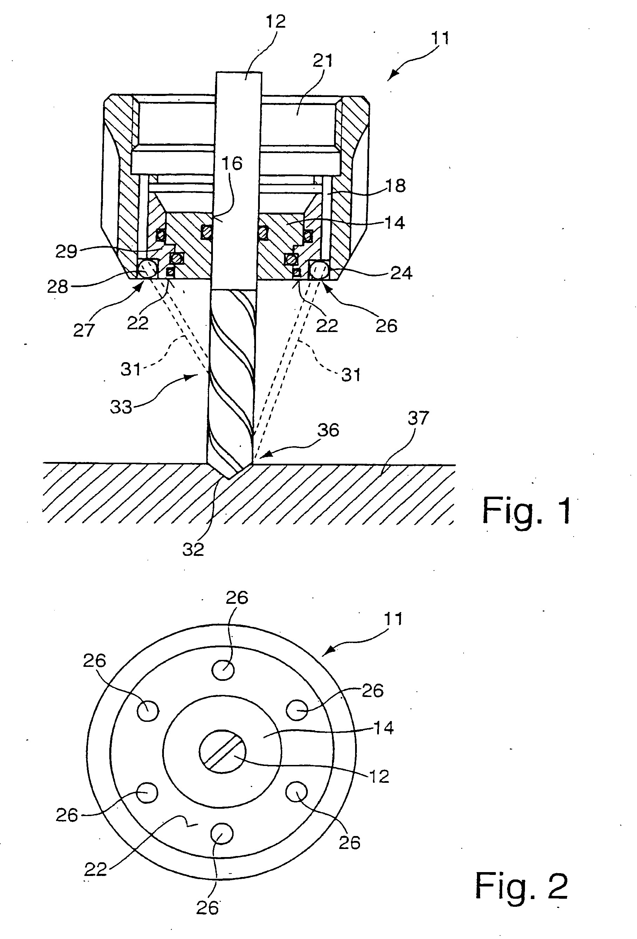

In Figur 1 ist eine Spannmutter 11 dargestellt, die zur Aufnahme von Werkzeugen 12 mit unterschiedlichen Durchmesser geeignet ist. Das Werkzeug 12 wird von einer nicht näher dargestellten Spannhülse in der Spannmutter 11 gehalten und fixiert. Zwischen der Spannmutter 11 und dem Werkzeug 12 ist eine Dichtscheibe 14 austauschbar vorgesehen, welche eine Abdichtung zwischen der Spannmutter 11 und der Dichtscheibe 14 einerseits und einem Innendurchmesser 16 der Dichtscheibe 14 und dem Werkzeug 12 ermöglicht. Zur Anordnung und Ausgestaltung der Dichtscheibe 14 wird vollständig auf die DE 42 20 045 A1 bezug genommen.

In der Spannmutter 11 ist zumindest ein Durchgangskanal 18 vorgesehen, der von einem Innenraum 21 der Spannmutter 11 zur bearbeitungsseitigen Stirnseite 22 der Spannmutter 11 führt. An der bearbeitungsseitigen Stirnseite 22 des Durchgangskanals 18 ist ein Aufnahmeabschnitt 24 vorgesehen, in welchen ein Düseneinsatz 26 eingepresst ist. Alternativ kann der Düseneinsatz geklebt, gelötet, verschweißt oder verschraubt sein. Des Weiteren kann vorgesehen sein, dass eine Überwurfmutter an der Spannmutter angreift, welche über eine Schraubverbindung befestigt ist und durch das Anziehen gleichzeitig mehrere Düseneinsätze 26 in den jeweiligen Aufnahmeabschnitten 24 fixiert.

Der Düseneinsatz 26 umfasst ein Kugelelement 27, welches eine Durchgangsbohrung 28 aufweist. Das Kugelelement 27 ist beispielsweise metallisch ausgebildet. Dieses Kugelelement 27 wird von einem Lager 29 aufgenommen, welches aus Metall oder Kunststoff ausgebildet ist. Das Kugelelement 27 kann durch eine Dorn oder einen Stift im Winkel einstellbar sein, um beispielsweise einen Kühl-/Schmiermittelstrahl 31 zur Spitze 32 des Werkzeuges 12 oder zum mittleren Bereich 33 des Werkzeugs zu führen. Die Einstellung der Düseneinsätze 26 in der Winkellage kann unabhängig voneinander und wahlweise vorgesehen sein.

Durch diese erfindungsgemäße Ausgestaltung wird ein gezielter Kühl-/Schmiermittelstrahl 31 auf das Werkzeug 12 gerichtet und zugeführt. Somit kann eine Bearbeitungsstelle 36 am Werkstück 37 gekühlt werden. Gleichzeitig kann das Werkzeug 12 gekühlt sein.

In Figur 2 ist eine Draufsicht auf eine bearbeitungsseitige Stirnseite 22 der Spannmutter 11 dargestellt. Beispielsweise sind in der Spannmutter 11 sechs Aufnahmeabschnitte 24 mit darin eingesetzten Düseneinsätzen 26 vorgesehen. Die Düseneinsätze 26 auf einer 12-Uhr-, 4-Uhr- und 8-Uhrposition sind in einem Winkel angeordnet, welcher zur Spitze 32 des Werkzeuges 12 gerichtet ist. Die Düseneinsätze auf einer 2-Uhr-, 6-Uhr- und 10-Uhrposition sind beispielsweise auf den mittleren Bereich 33 gerichtet.

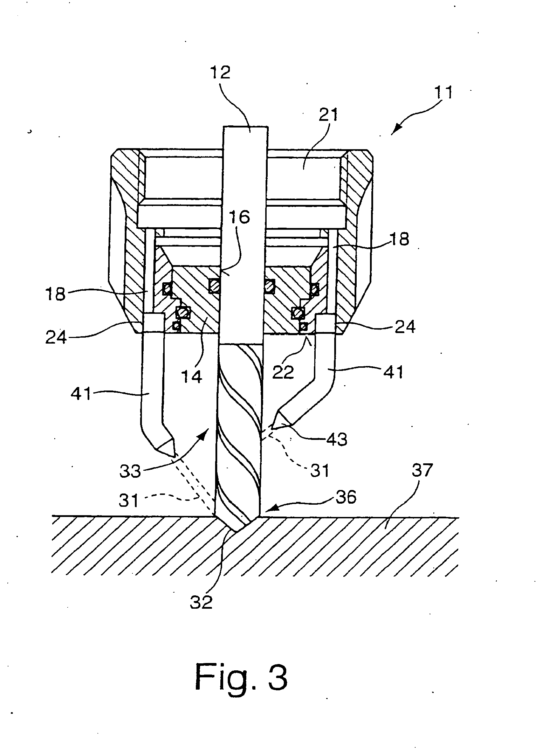

In Figur 3 ist eine alternative Ausführungsform zu Figur 1 dargestellt. In die Aufnahmeabschnitte 24 sind Führungsrohre 41 eingesetzt. Diese können eingeschraubt, eingepresst, eingeklebt oder verlötet oder dergleichen sein. Die Führungsrohre 41 sind bevorzugt aus metallischem Material, wie beispielsweise Kupfer oder dergleichen, ausgebildet. Durch eine entsprechende Formung des Rohres kann über einen düsenförmigen Austritt 43 der Kühl-/Schmiermittelstrahl 31 auf den gewünschten Bereich des Werkzeuges 12 gerichtet sein.

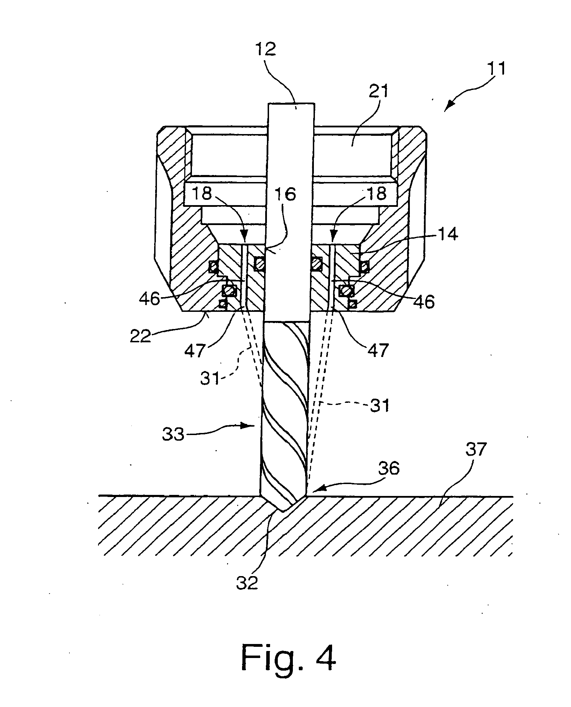

In Figur 4 ist eine schematische Schnittdarstellung einer weiteren alternativen Ausgestaltung der Spannmutter 11 dargestellt. Bei dieser Ausführungsform sind die Durchgangskanäle 18 in einer Dichtscheibe 14 vorgesehen. Diese Durchgangskanäle 18 weisen einen ersten und einen zweiten Kanalabschnitt 46, 47 auf, wobei der erste Kanalabschnitt 46 zum Innenraum 21 führt und der zweite Kanalabschnitt 47 an der bearbeitungsseitigen Stirnseite 22 austritt. Der zweite Kanalabschnitt 47 ist in einem Winkel gegen die Rotationsachse des Werkzeugs 12 geneigt, so dass der Kühl-/Schmiermittelstrahl 31 auf das Werkzeug 12 zugerichtet ist. Diese Spannmutter 11 kann durch Austausch einer Dichtscheibe 14 ohne Durchgangskanäle 18 ohne weitere Umrüstung als Spannmutter 11 für Werkzeuge 12 mit innengeführter Kühlung verwendet werden. Die zuvor als auch die nachfolgend genannten Ausführungsformen sind ebenfalls für einen solchen Einsatz geeignet. Vorzugsweise werden die Durchgangskanäle 18 mit einem nicht näher dargestellten Verschlussstopfen geschlossen.

Bei der in Figur 4 dargestellten Ausführungsform können Dichtscheiben 14 zur Aufnahme von gleichen Durchmessern mit einer unterschiedlichen Anzahl von Kanäle beziehungsweise deren Größe ausgebildet und für den Einsatz ausgewählt werden.

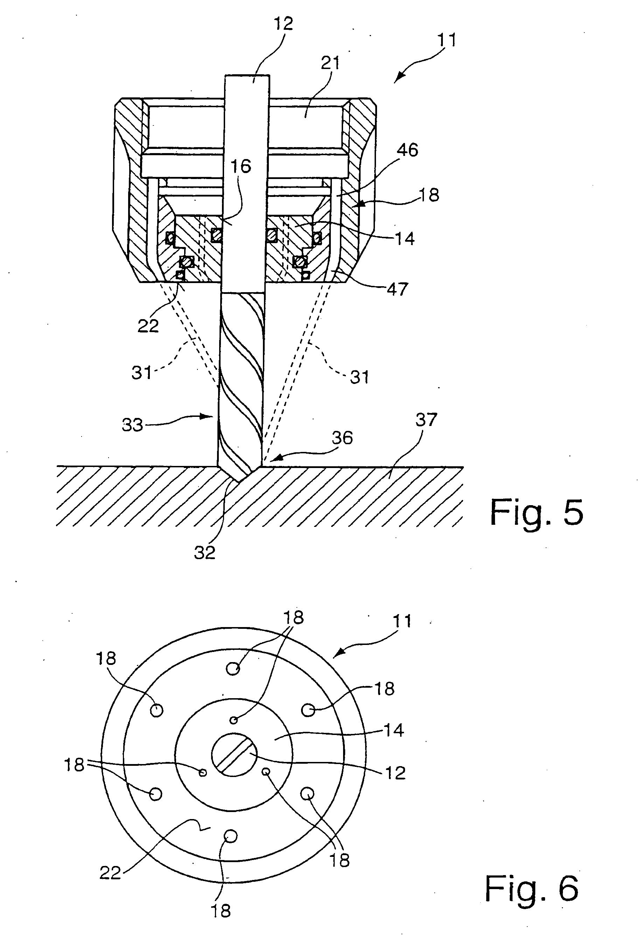

In Figur 5 ist eine schematische Schnittdarstellung einer weiteren alternativen Ausgestaltung der Erfindung dargestellt. In der Spannmutter 11 sind Durchgangskanäle 18 vorgesehen, wobei ein erster Kanalabschnitt 46 eine zylindrische Bohrung umfasst und ein zweiter Kanalabschnitt 47 eine düsenförmige Ausgestaltung aufweist. Diese düsenförmige Ausgestaltung des zweiten Kanalabschnitts 47 dient zur Strahlführung. Zusätzlich ist der zweite Kanalabschnitt 47 in einem Winkel gegenüber der Rotationsachse zur Zuführung des Kühl-/Schmiermittelstrahls 31 geneigt. Des Weiteren kann die Spannmutter 11 mit Durchgangskanälen 18 eine Dichtscheibe 14 mit Durchgangskanälen 18 aufnehmen, um beispielsweise sehr nahe der Dichtscheibe 14 zugeordnete Bereiche des Werkzeuges 12 zu kühlen.

In Figur 6 ist eine Draufsicht auf die Stirnseite 22 der Spannmutter 11 gemäß Figur 5 dargestellt. Die in der Spannmutter 11 vorgesehenen Durchgangskanäle 18 entsprechen beispielsweise der in Figur 2 beschriebenen Anordnung. Zusätzlich sind die in der Dichtscheibe 14 angeordneten Durchgangskanäle 18 vorgesehen.

Die Durchgangskanäle 18 sind bevorzugt gleichmäßig über den Umfang verteilt jeweils auf einem Durchmesserradius vorgesehen, um eine rotationssymmetrische Anordnung und Ausgestaltung der Spannmutter 11 und Dichtscheibe 14 zu ermöglichen.

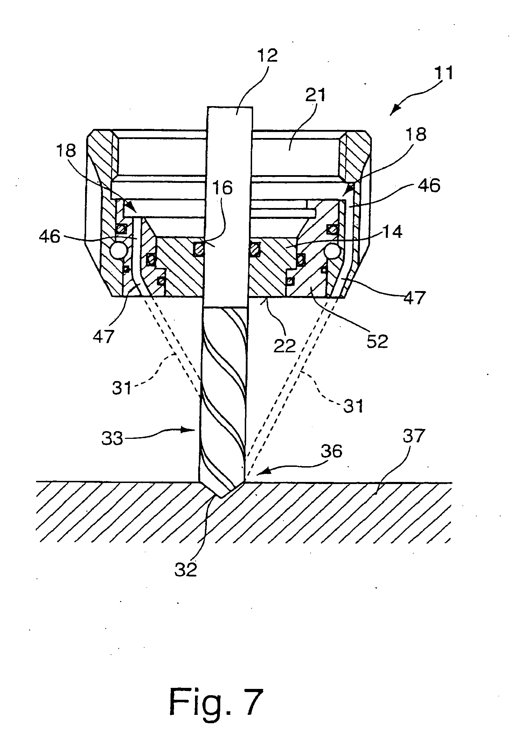

In Figur 7 ist eine schematische Schnittdarstellung einer weiteren alternativen Ausführungsform dargestellt. Diese Ausführungsform zeigt eine zweiteilige Spannmutter 11, welche eine Mutterhülse 51 und einen Innenkonus 52 umfasst. Zumindest ein Durchgangskanal 18 kann gemäß dem rechten Halbschnitt in der Mutterhülse 51 vorgesehen sein. Des Weiteren kann ein Durchgangskanal 18 in dem Innenkonus 52 gemäß dem linken Halbschnitt angeordnet sein. Die Ausbildung der Durchgangskanäle kann in der Mutterhülse 51 und/oder dem Innenkonus 52 und/oder der Dichtscheibe 14 vorgesehen sein. Die zuvor beschriebenen Ausführungsvarianten können auch bei der zweiteiligen Spannmutter 11 ausgebildet sein.

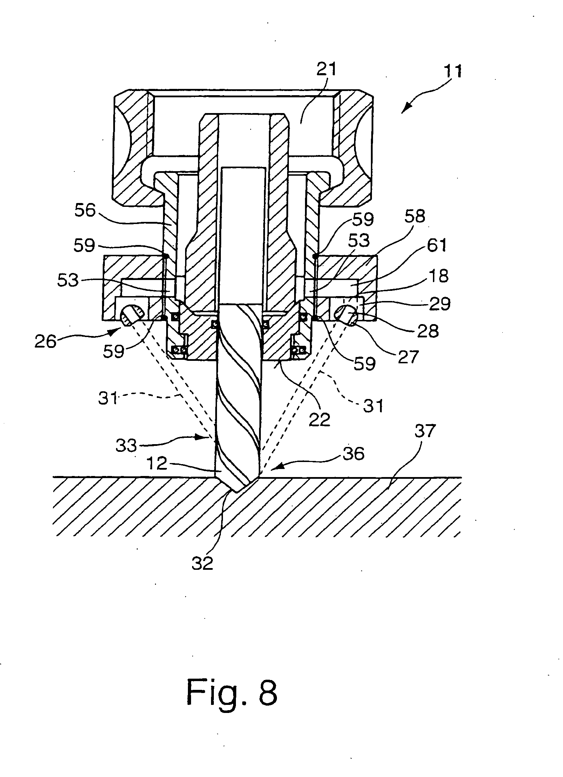

In Figur 8 ist eine weitere Ausführungsform einer erfindungsgemäßen Ausgestaltung für eine Spannmutter 11 mit Zungenhülse 56 dargestellt. Auf der Zungenhülse 56 ist ein Adapter 58 vorgesehen, welcher mediendicht aufgesetzt ist und zur Außenwand der Zungenhülse 56 Dichtelemente 59 aufweist. In dem Adapter 58 ist ein Einstich 61 vorgesehen, der eine Verbindung zwischen Austrittsöffnungen 53 in der Zungenhülse 56 und den Durchgangkanälen 18 verbindet. Durch die Ausgestaltung eines Adapters 58 wird ermöglicht, dass auch eine gezielte Zuführung des Kühl-/Schmiermittelstrahles 31 bei schwer zugänglichen Bearbeitungsstellen vorgesehen ist, für welche Spannmuttern 11 mit Zungenhülse 56 eingesetzt werden.

## Patentansprüche

1. Spannmutter als Werkzeughalterteil für ein Werkzeug (12) mit einem zylindrischen Aufnahmeschaft, mit einer auf einen Durchmesser des Werkzeugs (12) abgestimmten, auswechselbaren Dichtscheibe (14), die von hinten in die Spannmutter (11) einführbar und an einer Schulter der Spannmutter (11) ein- und ausrastbar vorgesehen ist, um den unkontrollierten Austritt von Kühl-/Schmiermittel zwischen der Spannmutter (11) und dem Werkzeug (12) zu vermeiden, **dadurch gekennzeichnet, dass** in der Spannmutter (11) oder der Dichtscheibe (14) zumindest ein Durchgangskanal (18) vorgesehen ist, der von einem Innenraum (21) der Spannmutter (11) zu einer bearbeitungsseitigen Stirnseite (22) der Spannmutter (11) oder Dichtscheibe (14) führt.

2. Spannmutter nach Anspruch 1, **dadurch gekennzeichnet, dass** die Durchgangskanäle (18) gleichmäßig über den Umfang verteilt zumindest in der Spannmutter (11) oder der Dichtscheibe (12) vorgesehen sind.

3. Spannmutter nach Anspruch 1 oder 2, **dadurch gekennzeichnet, dass** an einem zur Stirnseite (22) der Spannmutter (11) oder Dichtscheibe (14) weisenden Ende des Durchgangskanales (18) ein Aufnahmeabschnitt (24) vorgesehen ist, in den ein Düseneinsatz (26) oder ein Führungsrohr (41) austauschbar vorgesehen ist.

4. Spannmutter nach Anspruch 3, **dadurch gekennzeichnet, dass** der Düseneinsatz (26) oder das Führungsrohr (41) in den Aufnahmeabschnitt (24) eingepresst, eingeschraubt oder verschweißt oder verlötet vorgesehen ist.

5. Spannmutter nach Anspruch 3, **dadurch gekennzeichnet, dass** der Düseneinsatz (26) eine einstellbare Durchgangsbohrung (28) als Düse aufweist.

6. Spannmutter nach einem der vorhergehenden Ansprüche, **dadurch gekennzeichnet, dass** der zumindest eine Durchgangskanal (18) mit einem Verschlussstopfen verschließbar ist.

7. Spannmutter nach Anspruch 3, **dadurch gekennzeichnet, dass** das Führungsrohr (41) aus einem biegsamen Material, vorzugsweise metallischen Material, insbesondere Kupfer, ausgebildet ist.

8. Spannmutter nach Anspruch 3, **dadurch gekennzeichnet, dass** das zumindest eine Führungsrohr (41) in Drehrichtung gedrallt ist.

9. Spannmutter nach Anspruch 3, **dadurch gekennzeichnet, dass** das Führungsrohr (41) eine zum Werkzeug gerichteten düsenförmigen Austritt (43) aufweist.

10. Spannmutter nach einem der vorhergehenden Ansprüche, **dadurch gekennzeichnet, dass** der zumindest eine Durchgangskanal (18) einen ersten und einen zweiten Kanalabschnitt (46, 47) aufweist, wobei ein zur Stirnseite (22) weisender Kanalabschnitt (47) in einem zum Werkzeug geneigten Winkel vorgesehen ist.

11. Spannmutter nach Anspruch 10, **dadurch gekennzeichnet, dass** der erste Kanalabschnitt (46) in den Innenraum (21) der Spannmutter (11) mündet und vorzugsweise zylindrisch ausgebildet ist.

12. Spannmutter nach Anspruch 10, **dadurch gekennzeichnet, dass** der zweite Kanalabschnitt (47) des Durchgangskanales (18) zur Stirnseite der Spannmutter (11) oder der Dichtscheibe (14) weisend düsenförmig ausgebildet ist.

13. Spannmutter nach einem der vorhergehenden Ansprüche, **dadurch gekennzeichnet, dass** zumindest ein Durchgangskanal (18) in einem Winkel zur Stirnseite (22) austritt, der auf einen ersten Bereich des Werkzeuge (12) gerichtet ist und zumindest ein weiterer Durchgangskanal (18) in einem Winkel zur Stirnseite (22) austritt, der auf einen weiteren Bereich des Werkzeuges (12) gerichtet ist.

14. Spannmutter nach einem der vorhergehenden Ansprüche, **dadurch gekennzeichnet, dass** die Spannmutter (11) zweiteilig aus einer Mutterhülse (51) und einem Innenkonus (52) besteht und der zumindest eine Durchgangskanal (18) zumindest in der Mutterhülse (51) oder dem Konusring (52) oder der Dichtscheibe (14) vorgesehen ist.

15. Spannmutter nach einem der vorhergehenden Ansprüche, **dadurch gekennzeichnet, dass** der zumindest eine Durchgangskanal (18) durch Bohren, Erodieren, Laser- oder Wasserstrahlbearbeitung herstellbar ist.

## Claims

1. A clamping nut as a part of a tool holder for a tool (12) having a cylindrical retaining shaft, a replaceable sealing disc (14) adapted to a diameter of the tool (12) which is insertable from behind into the clamping nut (11) and capable of being locked into place on a shoulder of the clamping nut (11) and released therefrom, so as to prevent coolant/lubricant from escaping in an uncontrolled manner from between the clamping nut (11) and the tool (12), **characterised in that** the clamping nut (11) or the sealing disc (14) is provided with at least one passageway (18) leading from an interior (21) of the clamping nut (11) to a machining-side end face (22) of the clamping nut (11) or sealing disc (14).

2. The clamping nut of claim 1, **characterised in that** the passageways (18) are provided at least in the clamping nut (11) or the sealing disc (12) and are evenly distributed across the circumference thereof.

3. The clamping nut of claim 1 or 2, **characterised in that** on one end of the passageway (18) pointing towards the end face (22) of the clamping nut (11) or sealing disc (14), an accommodation portion (24) is provided in which a nozzle insert (26) or a guide tube (41) is provided in a replaceable manner.

4. The clamping nut of claim 3, **characterised in that** the nozzle insert (26) or the guide tube (41) is designed to be pressed, screwed, welded or soldered into the accommodation portion (24).

5. The clamping nut of claim 3, **characterised in that** the nozzle insert (26) has an adjustable through hole (28) serving as a nozzle.

6. The clamping nut of any of the preceding claims, **characterised in that** the at least one passageway (18) may be closed by a sealing plug.

7. The clamping nut of claim 3, **characterised in that** the guide tube (41) is formed of a pliable material, preferably a metallic material, in particular copper.

8. The clamping nut of claim 3, **characterised in that** the at least one guide tube (41) is twisted in the sense of rotation.

9. The clamping nut of claim 3, **characterised in that** the guide tube (41) has a nozzle-shaped outlet (43) directed towards the tool.

10. The clamping nut of any of the preceding claims, **characterised in that** the at least one passageway (18) has first and second passageway sections (46, 47), with a passageway section (47) pointing towards the end face (22) being provided with an angled portion that is inclined towards the tool.

11. The clamping nut of claim 10, **characterised in \that** the first passageway section (46) leads into the interior (21) of the clamping nut (11) and is preferably shaped in the form of a cylinder.

12. The clamping nut of claim 10, **characterised in that** the second passageway section (47) of the passageway (18) is nozzle-shaped on the side pointing towards the end face of the clamping nut (11) or the sealing disc (14).

13. The clamping nut of any of the preceding claims, **characterised in that** at least one passageway (18) has a discharging end oriented at such an angle relative to the end face (22) that it is directed to a first region of the tool (12), and that at least one further passageway (18) has a discharging end oriented at such an angle relative to the end face (22) that it is directed to a further region of the tool (12).

14. The clamping nut of any of the preceding claims, **characterised in that** the clamping nut (11) is in two parts, consisting of a nut sleeve (51) and an internal cone (52), and that the at least one passageway (18) is provided at least in the nut sleeve (51) or the cone ring (52) or the sealing disc (14).

15. The clamping nut of any of the preceding claims, **characterised in that** the at least one passageway (18) may be fabricated by means of drilling, electric discharge machining, laser beam machining, or hydrodynamic machining.

## Revendications

1. Ecrou de verrouillage faisant office d'élément porte-outil pour un outil (12) à queue de fixation cylindrique, ledit écrou comportant une rondelle d'étanchéité (14) échangeable adaptée à un diamètre de l'outil (12), laquelle peut être introduite par l'arrière dans l'écrou de verrouillage (11) et qui est prévue pour pouvoir s'engager dans un épaulement de l'écrou de verrouillage (11) et se dégager de celui-ci afin d'éviter le suintement incontrôlé de réfrigérant/lubrifiant entre l'écrou de verrouillage (11) et l'outil (12), **caractérisé en ce que** dans l'écrou de verrouillage (11) ou dans la rondelle d'étanchéité (14) est prévu au moins un canal de passage (18) qui mène d'un intérieur (21) de l'écrou de verrouillage (11) à une face frontale (22) située côté usinage de l'écrou de verrouillage (11) ou de la rondelle d'étanchéité (14).

2. Ecrou de verrouillage selon la revendication 1, **caractérisé en ce que** les canaux de passage (18) sont prévus de manière à être répartis uniformément sur la circonférence au moins dans l'écrou de verrouillage (11) ou la rondelle d'étanchéité (12).

3. Ecrou de verrouillage selon la revendication 1 ou 2, **caractérisé en ce qu'**à une extrémité du canal de passage (18) orientée vers la face frontale (22) de l'écrou de verrouillage (11) ou de la rondelle d'étanchéité (14) est prévue une partie de réception (24) dans laquelle est prévu de manière à pouvoir être échangé un élément buse (26) ou un tube guide (41).

4. Ecrou de verrouillage selon la revendication 3, **caractérisé en ce que** l'élément buse (26) ou le tube guide (41) est prévu pour être pressé, vissé ou bien soudé ou brasé dans la partie de réception (24).

5. Ecrou de verrouillage selon la revendication 3, **caractérisé en ce que** l'élément buse (26) présente comme buse un trou de passage (28) réglable.

6. Ecrou de verrouillage selon l'une des revendications précédentes, **caractérisé en ce que** ledit au moins un canal de passage (18) peut être fermé avec un bouchon de fermeture.

7. Ecrou de verrouillage selon la revendication 3, **caractérisé en ce que** le tube guide (41) est formé en un matériau souple, de préférence un matériau métallique, notamment du cuivre.

8. Ecrou de verrouillage selon la revendication 3, **caractérisé en ce que** ledit au moins un tube guide (41) est vrillé dans le sens de rotation.

9. Ecrou de verrouillage selon la revendication 3, **caractérisé en ce que** le tube guide (41) présente une sortie (43) en forme de buse dirigée vers l'outil.

10. Ecrou de verrouillage selon l'une des revendications précédentes, **caractérisé en ce que** ledit au moins un canal de passage (18) présente une première et une deuxième partie (46, 47), une partie de canal (47) orientée vers la face frontale (22) étant prévue dans un angle incliné vers l'outil.

11. Ecrou de verrouillage selon la revendication 10, **caractérisé en ce que** la première partie de canal (46) débouche dans l'intérieur (21) de l'écrou de verrouillage (11) et est de préférence réalisée de forme cylindrique.

12. Ecrou de verrouillage selon la revendication 10, **caractérisé en ce que** la deuxième partie (47) du canal de passage (18) est, du côté dirigé vers la face frontale de l'écrou de verrouillage (11) ou de la rondelle d'étanchéité (14), réalisée en forme de buse.

13. Ecrou de verrouillage selon l'une des revendications précédentes, **caractérisé en ce qu'**au moins un canal de passage (18) sort dans un angle par rapport à la face frontale (22) lequel est dirigé sur une première zone de l'outil (12), et **en ce que** au moins un autre canal de passage (18) sort dans un angle par rapport à la face frontale (22) lequel est dirigé sur une autre zone de l'outil (12).

14. Ecrou de verrouillage selon l'une des revendications précédentes, **caractérisé en ce que** l'écrou de verrouillage (11) se compose de deux parties, à savoir une douille d'écrou (51) et un cône intérieur (52), et **en ce que** ledit au moins un canal de passage (18) est prévu au moins dans la douille d'écrou (51) ou dans l'anneau conique (52) ou dans la rondelle d'étanchéité (14).

15. Ecrou de verrouillage selon l'une des revendications précédentes, **caractérisé en ce que** ledit au moins un canal de passage (18) peut être fabriqué par perçage, usinage par électroérosion, usinage au laser ou usinage hydrodynamique.
